# EUROPÄISCHE PATENTSCHRIFT

(11) **EP 2 380 806 B1**
(45) Veröffentlichungstag und Bekanntmachung des Hinweises auf die Patenterteilung: **04.12.2013**
(21) Anmeldenummer: 11163520.7
(22) Anmeldetag: 21.04.2011
(51) Int. Cl.: B62M 6/55, B62M 6/45

(54) **Kraftübertragungseinheit**
Power transmission unit
Unité de transmission de force

(30) Priorität: 21.04.2010 DE 102010017917
(43) Veröffentlichungstag der Anmeldung: 26.10.2011
(73) Patentinhaber: Daum GmbH & Co. KG, 90768 Fürth (DE)
(72) Erfinder: Krieger, Peter, 90427, Nürnberg (DE); Mitländer, Gerd, 90762, Fürth (DE)
(74) Vertreter: Rau, Schneck & Hübner

(56) Entgegenhaltungen:
- DE-B3-102005 013 865
- DE-C1- 3 722 728
- JP-A- 7 215 259
- JP-A- 11 227 672
- US-A1- 2005 167 226

## Beschreibung

Die Erfindung betrifft eine Kraftübertragungseinheit für ein durch einen auf ein Antriebsmittel wirkenden Elektromotor unterstützend antreibbares Fahrrad sowie ein Fahrrad mit einer derartigen Kraftübertragungseinheit.

Aus der US 2005/0167226 A1 ist eine Kkraftübertragungseinheit mit dem Merkmalen des Oberbegriffes des Anspruchs 1 bekannt.

Fahrräder mit einem Elektromotor zum unterstützenden Antreiben des Fahrrads sind seit einiger Zeit beispielsweise aus der US 2005/0167226 A1 bekannt. Ein derartiges Fahrrad weist einen Elektromotor auf. Eine Tretlagerwelle kann durch Muskelkraft um eine Drehachse in und entgegen einer Antriebsdrehrichtung betätigt werden. Eine Freilaufeinheit wirkt mit der Tretlagerwelle zusammen und weist einen Schalter zum Entkoppeln des Elektromotors von dem Kraftübertragungsmittel auf. Fahrräder mit einem Elektromotor zum unterstützenden Antreiben des Fahrrads werden auch als Pedelecs bezeichnet. Aufgrund des unterstützenden Antriebs durch den Motor ist ein über Pedale durch Muskelkraft antreibbarer Kettenantrieb von dem Motorantrieb mittels eines Freilaufs entkoppelt, um ein Antreiben des Fahrrads durch den Motor zu ermöglichen, ohne dass die Pedale mitdrehen. Infolge dieser Entkopplung ist die Verwendung einer konventionellen über die Kette auf die hintere Radnabe wirkende Rücktrittbremse nicht möglich. Es ist nachteilig, dass derartige Fahrräder nicht mittels einer Rücktrittbremse betätigbar sind.

Es ist die Aufgabe der vorliegenden Erfindung, eine Kraftübertraguvgseinheit für ein durch einen auf ein Antriebsmittel wirkenden Elektromotor unterstützend antreibbares Fahrrad zu schaffen, mit der der Fahrkomfort des Fahrrads verbessert ist.

Diese Aufgabe wird durch eine Kraftübertragungseinheit mit den Merkmalen des Anspruchs 1 sowie durch ein Fahrrad mit den Merkmalen des Anspruchs 12 gelöst.

Erfingdungsgemäß wurde erkannt, dass eine Kraftübertragungseinheit neben einer durch Muskelkraft um eine Drehachse antreibbaren Tretlagerwelle auch eine mit der Tretlagerwelle zusammenwirkende Freilaufeinheit aufweist. Die Tretlagerwelle dient zum Übertragen einer Antriebskraft in einer Antriebsdrehrichtung oder zum Übertragen einer Bremskraft entgegen der Antriebsdrehrichtung auf ein Kraftübertragungsmittel, insbesondere auf eine mit einem Kettenblatt drehfest verbundene Kette und von dort auf das Hinterrad des Fahrrads. Die Freilaufeinheit weist einen Schalter zum Entkoppeln des unterstützenden Elektromotors von dem Kraftübertragungsmittel auf, wenn kein Antrieb durch Muskelkraft in der Antriebsdrehrichtung auf das Kraftübertragungsmittel übertragen wird. Dabei ist der Schalter derart gestaltet, dass in einer Antriebsstellung der Tretlagerwelle ein Antriebssignal zur Übertragung an eine Steuerung des Elektromotors bereitgestellt wird, sodass der Elektromotor die Tretlagerwelle unterstützend zum Antrieb durch Muskelkraft antreibt. Entsprechend stellt der Schalter in jeder von der Antriebsstellung verschiedenen Stellung der Tretlagerwelle ein von dem Antriebssignal abweichendes Freilaufsignal zur Übertragung an die Steuerung des Elektromotors bereit, sodass der Elektromotor angehalten oder von der Tretlagerwelle und von dem Kraftübertragungsmittel entkoppelt ist. Dadurch ist es möglich, dass einerseits bei Betätigen der Tretlagerwelle in Antriebsdrehrichtung die Antriebskraft durch Muskelkraft auf das Fahrrad über das Kraftübertragungsmittel eingeleitet werden kann und durch den Elektromotor zusätzlich unterstützt wird. Durch die Möglichkeit, den Elektromotor von dem Kraftübertragungsmittel zu entkoppeln, werden die Pedale einerseits nicht weiter durch den Elektromotor in Antriebsrichtung mitbewegt, beispielsweise, falls in einer Freilaufstellung ein Fahrer aufhört zu treten und das Fahrrad rollen lässt, und andererseits kann eine Drehung der Tretlagerwelle entgegen der Antriebsrichtung erfolgen, um eine durch Muskelkraft verursachte Bremskraft über das Kraftübertragungsmittel auf eine an der hinteren Radnabe angeordneten Rücktrittbremse in einer Bremsstellung zu übertragen. Damit ist es möglich, den Elektromotor schnell und sicher abzuschalten, sobald die Freilaufstellung der Tretlagerwelle erreicht ist, d.h. sobald die Tretlagerwelle nicht mehr durch die Muskelkraft eines Fahrers bewegt bzw. in der Bremsstellung zum Bremsen entgegen der Antriebsdrehrichtung gedreht wird.

Mit einer Tretlagerwelle, die mindestens zwei bezüglich der Drehachse radial nach außen gerichtete Nocken aufweist, wird die mechanische Betätigung des Schalters ermöglicht. Bei einer derartigen Gestaltung kann der Schalter direkt in die Kraftübertragungseinheit integriert werden. Eine derartige Kraftübertragungseinheit ist einfach, kompakt und platzsparend aufgebaut.

Ein Schalter gemäß Anspruch 2 kann durch die durch Muskelkraft betätigte Tretlagerwelle mechanisch ausgelöst werden. Dadurch kann der Schalter direkt in die Kraftübertragungseinheit integriert werden, wodurch zusätzliche Komponenten und/oder Leitungen eingespart werden können. Durch die Ausführung des Schalters derart, dass dieser in der Freilaufstellung oder in der Bremsstellung der Tretlagerwelle sofort geöffnet wird, ist die sichere und schnelle Abschaltung des Motors gewährleistet. Eine derartige Kraftübertragungseinheit ist einer Sensorik der Krafterfassung an der Tretlagerwelle überlegen. Bei der Krafterfassung werden analoge Messwerte ermittelt, anschließend Mittelwerte berechnet und diese verarbeitet. Dieses System ist träge, sodass eine vergleichsweise große Zeitspanne erforderlich ist, um den Motor rechtzeitig zu bremsen.

Eine Kraftübertragungseinheit mit einem berührungslosen Übertragungssystem gemäß Anspruch 3 ermöglicht eine sichere Übertragung der vom Schalter bereitgestellten Signale an die Steuerung des Elektromotors. Aufgrund der Paarung von bewegten und nicht-bewegten Komponenten des Übertragungssystems ist die berührungslose Ausführung vorteilhaft. Insbesondere eignet sich dafür ein induktives Übertragungssystem. Grundsätzlich sind auch andere berührungslose Systeme denkbar wie beispielsweise optische oder Funkübertragungssysteme.

Bei einem induktiven Übertragungssystem gemäß Anspruch 4 kann eine mitdrehende Spule direkt und fest mit Komponenten der Kraftübertragungseinheit verbunden sein. Die mitdrehende Spule ist fest und robust in die Kraftübertragungseinheit integriert. Eine feststehende Spule kann ortsfest an dem Fahrrad beispielsweise in eine Ketten-Schutzabdeckung integriert sein. Die feststehende Spule ist an die Steuerung des Elektromotors anschließbar. Durch Verwendung einer elektrischen, insbesondere drahtgebundenen Leitung ist eine besonders robuste Signalübertragung ermöglicht, die wenig anfällig gegenüber Nässe, Schmutz und/oder Temperaturschwankungen ist.

Eine Kraftübertragungseinheit gemäß Anspruch 5 ermöglicht ein rasches Abbremsen des Elektromotors, sodass die Betätigung der Rücktrittbremse über das Kraftübertragungsmittel, insbesondere verzögerungsfrei, erfolgt.

Eine Kraftübertragungseinheit nach Anspruch 6 ermöglicht insbesondere die Anordnung der Tretlagerwelle in einer Freilaufstellung auch dann, wenn die Tretlagerwelle nicht betätigt wird. Wenn ein Fahrer nach vorherigem Betätigen der Tretlagerwelle in der Antriebsdrehrichtung die Betätigung beendet, kann eine Hohlwelle aufgrund der Massenträgheit in der Antriebsdrehrichtung geringfügig weiterdrehen. Es ist auch möglich, dass die Freilaufstellung dadurch eingenommen wird, dass ein Fahrer die Tretkurbel und damit die Tretlagerwelle entgegen der Antriebsdrehrichtung betätigt.

Eine Gestaltung der Kraftübertragungseinheit nach Anspruch 7 ermöglicht eine besonders effiziente Kraftübertragung von der Tretlagerwelle auf eine Hohlwelle zur Drehmomentübertragung. Aufgrund der zumindest teilweisen Anordnung der Wellen ineinander ergibt sich eine zusätzliche Platzersparnis im Bereich der Kraftübertragungseinheit. Da die Hohlwelle von der Tretlagerwelle in der Antriebsstellung mitgenommen bzw. mitgedreht wird, wird die Hohlwelle insbesondere auch als Mitnehmer bezeichnet.

Durch die Verwendung eines Dämpfungselements als Anschlagelement gemäß Anspruch 8 kann ein Anschlagen der Nocken der Tretlagerwelle an die Anschlagelemente der Hohlwelle gedämpft werden. Insbesondere kann dadurch ein Klack-Geräusch beim gegenseitigen Anschlagen der Elemente reduziert, insbesondere verhindert werden. Dazu weist das Dämpfungselement in etwa gleiche Abmessungen wie eines der Anschlagelemente der Hohlwelle auf mit einer vergrößerten Ausdehnung in tangentialer Richtung bezüglich der Drehachse, sodass bei einer Verdrehung der Tretlagerwelle gegenüber der Hohlwelle ein Nocken immer zuerst gegen das Dämpfungselement schlägt und von diesem gedämpft wird, bevor es zum drehmomentübertragenden Anliegen der weiteren Nocken an den übrigen Anschlagelementen kommt. Das Dämpfungselement kann austauschbar in der Hohlwelle gestaltet sein.

Bei einer Kraftübertragungseinheit gemäß Anspruch 9 ermöglicht eine Anschlagfläche ein Anschlagen der Nocken der Tretlagerwelle bei Betätigung der Tretlagerwelle entgegen der Antriebsdrehrichtung, ohne dass der Schalter betätigt wird. Dadurch kann die Rücktrittbremse über das Kraftübertragungsmittel betätigt werden, ohne dass ein entgegen der Bremskraft wirkender Antrieb durch den Elektromotor aktiviert ist.

Eine Kraftübertragungseinleit mit einer Tretlagerwelle, die gemäß Anspruch 10 vier Nocken aufweist, ist insbesondere im Wesentlichen rotationssymmetrisch gestaltet. Die Herstellung der Tretlagerwelle ist vereinfacht. Weiterhin erfüllt die Tretlagerwelle mehrere Funktionen. Während in der Antriebsstellung mit einem ersten Nocken der Schalter für den Elektromotor betätigt ist und ein dem ersten Nocken insbesondere diametral gegenüberliegend angeordneter vierter Nocken zur Dämpfung des Anschlagens der Tretlagerwelle gegen die Hohlwelle dient, ermöglichen zwei weitere, insbesondere einander diametral gegenüberliegend angeordnete Nocken eine gleichmäßige Übertragung eines Drehmoments von der Tretlagerwelle auf die Hohlwelle. In der Freilaufstellung erfolgt keine Drehmomentübertragung zwischen Tretlagerwelle und Hohlwelle. In dieser Stellung sind die Nocken von den Anschlagelementen beabstandet. In der Bremsstellung dienen drei Nocken zur gleichmäßigen Drehmomentübertragung auf die Hohlwelle über zwei Anschlagelemente und die Anschlagwand. Ein in der Antriebsstellung zur Drehmomentübertragung dienender Nocken ermöglicht in der Bremsstellung die Dämpfung des Anschlagens der Tretlagerwelle gegen die Hohlwelle. Die vier Nocken sind insbesondere in Umfangsrichtung regelmäßig voneinander beabstandet an dem Umfang der Tretlagerwelle angeordnet.

Eine Kraftübertragungseinheit nach Anspruch 11 weist eine Bremsstellung der Tretlagerwelle zum Übertragen einer Bremskraft auf die am Hinterrad des Fahrrads vorgesehene Rücktrittbremse auf. In dieser Bremsstellung ist der Elektromotor entkoppelt oder abgebremst.

Ein Fahrrad gemäß Anspruch 12 weist eine Kraftübertragungseinheit mit den vorstehend genannten Vorteilen auf.

Ein Ausführungsbeispiel der Erfindung wird nachfolgend anhand der Zeichnung näher erläutert. In dieser zeigen:
- Fig. 1: eine zu einer Drehachse senkrechte Schnittdarstellung einer erfindungsgemäßen Kraftübertragungseinheit in einer Antriebsstellung einer Tretlagerwelle,
- Fig. 2: eine Fig. 1 entsprechende Ansicht in einer Freilaufstellung der Tretlagerwelle, und
- Fig. 3: eine Fig. 1 entsprechende Ansicht in einer Bremsstellung der Tretlagerwelle.

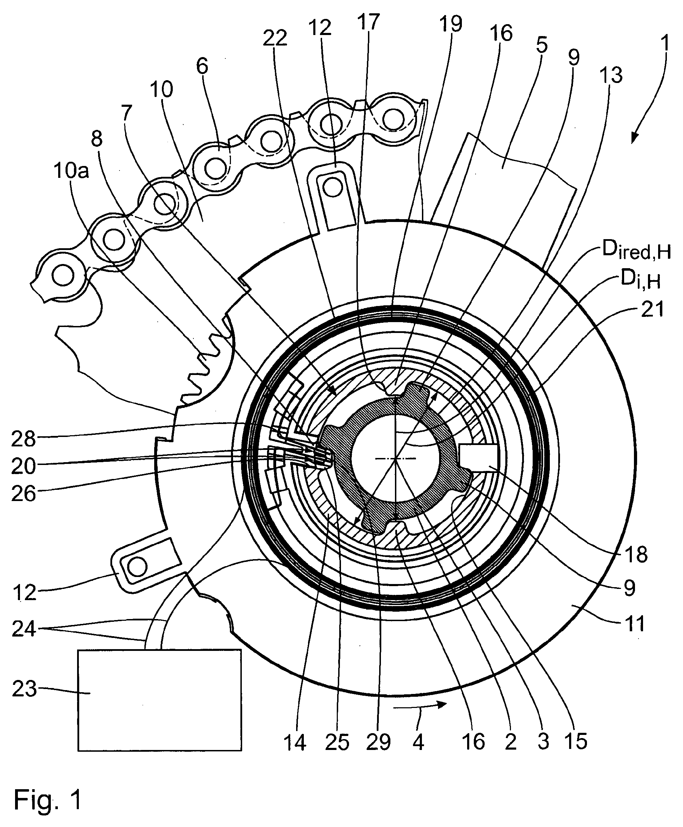

Eine in Fig. 1 bis 3 dargestellte Kraftübertragungseinheit 1 dient zur Verwendung für ein durch einen nicht dargestellten Elektromotor unterstützend antreibbares Fahrrad. Die Kraftübertragungseinheit 1 umfasst eine Tretlagerwelle 2, die gemäß dem gezeigten Ausführungsbeispiel als Hohlwelle ausgeführt ist und um eine Drehachse 3 in einer Antriebsdrehrichtung 4 durch Muskelkraft antreibbar ist. Durch die Ausführung der Tretlagerwelle 2 als Hohlwelle ist deren Gewicht reduziert. Die Tretlagerwelle 2 kann alternativ auch als Vollwelle ausgeführt sein, um beispielsweise eine erhöhte Stabilität der Welle zu ermöglichen. An ihren Enden ist die Tretlagerwelle 2 drehmomentenfest mit jeweils einer in Fig. 1 nur teilweise dargestellten Tretkurbel 5 verbunden. An jeweils den mit der Tretlagerwelle 2 verbundenen Enden gegenüberliegenden Enden der Tretkurbeln 5 sind in bekannter Weise nicht dargestellte Pedale vorgesehen.

Eine Freilaufeinheit 7 ist mit einem Schalter 8 zum Zusammenwirken mit der Tretlagerwelle 2 derart vorgesehen, dass der unterstützend antreibende Elektromotor von dem Kraftübertragungsmittel entkoppelbar ist, wenn kein Antrieb durch Muskelkraft in der Antriebsdrehrichtung 4 auf das Kraftübertragungsmittel übertragen wird.

Durch die nicht dargestellten Pedale ist die Tretkurbel 5 und die drehfest damit verbundene Tretlagerwelle 2 durch Muskelkraft um die Drehachse 3 in der Antriebsdrehrichtung 4 zum Übertragen einer Antriebskraft oder entgegen der Antriebsdrehrichtung 4 zum Übertragen einer Bremskraft auf das Kraftübertragungsmittel geeignet. Dazu ist ein konzentrisch zur Drehachse 3 und mittels der Freilaufeinheit 7 mit der Tretlagerwelle 2 gekoppeltes Kettenblatt 10 verbunden. Das Kettenblatt 10 ist scheibenförmig gestaltet und weist mehrere radial nach außen gerichtete Zähne zum Eingriff mit Gliedern einer Kette 6 als Kraftübertragungsmittel auf. Sowohl das Kettenblatt 10 als auch die Kette 6 sind aus Übersichtlichkeitsgründen in Fig. 1 nur ausschnittsweise dargestellt. Es ist auch möglich, das Kettenblatt 10 durch ein anderes Element zur Kraftübertragung, wie beispielsweise eine Riemenscheibe, zu ersetzen. In diesem Fall ist das Kraftübertragungsmittel entsprechend nicht eine Kette, sondern ein Riemen.

Zum unterstützenden Antreiben des Kettenblatts 10 durch den Elektromotor ist letzterer seitlich beabstandet zu der Drehachse 3 angeordnet. Ein von dem Motor antreibbares Antriebsritzel greift in eine Antriebs-Zahnscheibe 10a ein. Die Antriebs-Zahnscheibe 10a ist mit dem Kettenblatt 10 insbesondere drehfest verbunden, so dass von dem Elektromotor über das Antriebsritzel und die Antriebs-Zahnscheibe 10a eine Antriebskraft auf die Kette 6 als Kraftübertragungsmittel für das Hinterrad des Fahrrads übertragen wird. Die Antriebs-Zahnscheibe 10a ist von einer Trägerabdeckung 11 abgedeckt. Die Trägerabdeckung 11 ist mittels zweier Befestigungslaschen 12 innerhalb eines Gehäuses des Elektromotors befestigbar. Gemäß dem gezeigten Ausführungsbeispiel weist die Abdeckung 11 eine bogenförmige Ausnehmung zum Eingreifen des Antriebsritzels in die Antriebs-Zahnscheibe 10a auf.

Die Tretlagerwelle 2 weist an einer äußeren Mantelfläche 13 radial nach außen gerichtete und in Umfangsrichtung insbesondere regelmäßig beabstandete Nocken 9 auf, die senkrecht zur Drehachse 3 einen im Wesentlichen rechteckigen oder gleichschenklig trapezförmigen Querschnitt haben. Die Nocken 9 weisen entlang der Drehachse 3 gegenüber der Tretlagerwelle 2 eine reduzierte axiale Ausdehnung auf. Es ist auch möglich, die Tretlagerwelle 2 mit entlang der Drehachse 3 durchgängigen Nocken 9 als Profilrohr auszubilden. Die Nocken 9 sind dann als Rippen parallel zur Drehachse 3 gestaltet. Es können auch mehr oder weniger als vier Nocken 9 an der Tretlagerwelle 2 vorgesehen sein, mindestens jedoch zwei Nocken 9.

Die Tretlagerwelle 2 ist in einer Hohlwelle 14 der Freilaufeinheit 7 konzentrisch angeordnet. Ein Innendurchmesser D_{i, H} der Hohlwelle 14 ist derart festgelegt, dass die Tretlagerwelle 2 mit den Nocken 9 darin um die Drehachse 3 drehbar ist. Die Hohlwelle 14 weist mehrere an einer Innenwand 15 radial nach innen gerichtete Anschlagelemente 16 auf. An den Stellen der Anschlagelemente 16 weist die Hohlwelle 14 einen reduzierten Innendurchmesser D_{ired}, _{H} auf, sodass eine Rotation der Tretlagerwelle 2 mit den Nocken 9 um die Drehachse 3 durch die Anschlagelemente 16 auf einen festgelegten Winkelbereich um die Drehachse 3 begrenzt ist. Gemäß dem gezeigten Ausführungsbeispiel beträgt dieser Winkelbereich in etwa 90°. Durch entsprechende Anordnung der Nocken 9 und der Anschlagelemente 16 kann der Winkelbereich entsprechend festgelegt werden. Die Anschlagelemente 16 weisen senkrecht zur Drehachse 3 einen insbesondere an den korrespondierenden Querschnitt der Nocken 9 angepassten, im Wesentlichen rechteckig oder gleichschenklig trapezförmigen Querschnitt auf. Im Ausführungsbeispiel ist ein Trapezquerschnitt vorgesehen, wobei radial verlaufende Flanken 17 eines Anschlagselements 16 zueinander in einem von Null verschiedenen Winkel ausgerichtet sind. Die Flanken 17 dienen als Anschlag für die Nocken 9 an den Anschlagelementen 16.

Sowohl die Tretlagerwelle 2 als auch die Hohlwelle 14 sind aus metallischem Material, insbesondere aus Stahl oder Aluminium, hergestellt. Zur Dämpfung des Anschlagens der Nocken 9 der Tretlagerwelle 2 an den Anschlagelementen 16 der Hohlwelle 14 ist ein Dämpfungselement 18 an der Hohlwelle 14 vorgesehen. Das Dämpfungselement 18 ist austauschbar in die Hohlwelle 14 integriert und aus einem elastischen, dämpfenden Werkstoff, insbesondere aus Kunststoff, hergestellt. Das Dämpfungselement 18 ist an einer entsprechenden Position eines Anschlagelements 16 angeordnet.

Drehfest an der Hohlwelle 14 ist der Schalter 8 angeordnet, der mit einer mitdrehenden Spule 19 fest verbunden ist. Die mitdrehende Spule 19 hat eine beispielsweise konzentrisch zur Drehachse 3 angeordnete Wicklung. Der Schalter 8 umfasst zwei Schaltkontakte 20, die in einer Ausgangsstellung, d. h. ohne äußere Betätigung, geöffnet sind, sich also nicht gegenseitig kontaktieren. Die Schaltkontakte 20 sind über eine elektrische Leitung an die mitdrehende Spule 19 angeschlossen. Die elektrische Leitung ist mit einem ersten Ende eines im Wesentlichen radial zur Drehachse 3 angeordneten Federbeins 28 des Schaltkontakts 20 verbunden. Das Federbein 28 ist aus metallischem Draht, der gute elektrische Eigenschaften aufweist, hergestellt und weist bezüglich einer Auslenkung in tangentialer Richtung um die Drehachse 3 gute mechanische elastische Eigenschaften auf. An einem zweiten, dem ersten Ende des Federbeins 28 gegenüberliegenden Ende ist ein Kontaktelement 29 mit dem Federbein 28 mechanisch fest und elektrisch leitend verbunden. In dem gezeigten Ausführungsbeispiel in Fig. 1 wird der obere der beiden Schaltkontakte 20 durch einen Nocken 9 der Tretlagerwelle 2 betätigt und somit in der Antriebsdrehrichtung 4 gedrückt, sodass ein Kontakt zwischen den beiden Schaltkontakten 20 durch Berührung der Kontaktelemente 29 hergestellt ist. In dieser, der sogenannten Antriebsstellung der Tretlagerwelle 2, ist der Schalter 8 geschlossen. Konzentrisch zu der mitdrehenden Spule 19 und durch einen Luftspalt 21 beabstandet ist eine feststehende Spule 22 angeordnet, die mittels der Trägerabdeckung 11 bezüglich der Drehachse 3 zentriert und platziert ist. Die beiden Spulen 19, 22 sind Teil eines berührungslosen Übertragungssystems zur Übertragung vom Schalter 8 bereitgestellter Signale an eine Steuerung 23 des Elektromotors. Dazu ist die Steuerung 23 mittels einer elektrischen Leitung 24 mit der feststehenden Spule 22 verbunden. Es ist auch denkbar, alternative Übertragungssysteme, beispielsweise ein optisches oder ein Funkübertragungssystem anstelle des induktiven Übertragungssystems einzusetzen. Besonders vorteilhaft ist jedoch die Verwendung einer berührungslosen Signalübertragung aufgrund des mitdrehenden Schalters 8 und der feststehenden Steuerung 23. Die Steuerung 23 steht zur Steuerung des Elektromotors mit diesem in Signalverbindung.

Der Schalter 8 ist derart an der Kraftübertragungseinheit 1 angeordnet, dass die Schaltkontakte 20 in einen von der Hohlwelle 14 zumindest teilweise umschlossenen Innenraum hineinragen und von einem der Nocken 9 betätigbar sind. Dazu weist die Hohlwelle 14 eine radiale Öffnung 26 auf, durch die der Schalter 8 in den Innenraum der Hohlwelle 14 geführt ist. Die Schaltkontakte 20, d. h. vor allem die Kontaktelemente 29, sind also derart angeordnet, dass bei einer Drehung der Tretlagerwelle 2 in der Antriebsdrehrichtung 4 um die Drehachse 3 die Schaltkontakte 20 von einem der Nocken 9 derart betätigt werden können, dass sie, wie in Fig. 1 gezeigt, einander berühren und der Schalter 8 geschlossen ist.

Weiterhin ist an der Hohlwelle 14 eine Anschlagwand 25 vorgesehen, die entgegen der Antriebsdrehrichtung 4 vor dem Schalter 8 angeordnet ist. Damit wird verhindert, dass bei Drehung der Tretlagerwelle 2 entgegen der Antriebsdrehrichtung 4 der Schalter 8 durch die Nocken 9 der Tretlagerwelle 2 betätigt wird.

Im Folgenden werden anhand der Fig. 1 bis 3 die verschiedenen Betriebsweisen der Kraftübertragungseinheit 1 näher erläutert. In der Darstellung gemäß Fig. 1 wird die Tretlagerwelle 2 über die Tretkurbel 5 in der Antriebsdrehrichtung 4 durch Muskelkraft betrieben. Die Nocken 9 der Tretlagerwelle 2 liegen an den Anschlagelementen 16 und dem Dämpfungselement 18 an. Durch den Kontakt zwischen den Nocken 9 und den Anschlagelementen 16 ist eine Drehmomentübertragung von der Tretlagerwelle 2 auf die Hohlwelle 14 und damit auf das Kettenblatt 10 und die Kette 6 zur Übertragung der Antriebskraft in der Antriebsdrehrichtung 4 auf das Hinterrad des Fahrrads möglich. Die Schaltkontakte 20 des Schalters 8 sind derart in der Hohlwelle 14 angeordnet, dass die Kontaktelemente 29 in der in Fig. 1 gezeigten Antriebsstellung der Tretlagerwelle 2 durch einen der Nocken 9 betätigt und miteinander verbunden sind und damit der Schalter 8 geschlossen ist. In der Antriebsstellung wird ein Antriebssignal durch den Schalter 8 zur Übertragung an die Steuerung 23 des Elektromotors bereitgestellt, sodass der Elektromotor die Tretlagerwelle 2 unterstützend zu dem Antrieb durch Muskelkraft antreibt. Das Antriebssignal wird von dem Schalter 20 über die mitdrehende Spule 19 beispielsweise durch eine Spannungsänderung an der feststehenden Spule 22 übertragen. Diese Spannungsänderung wird anschließend gleich gerichtet, gefiltert und mit einem nicht gezeigten Komparator für die Steuerung 23 des Elektromotors signaltechnisch umgewandelt.

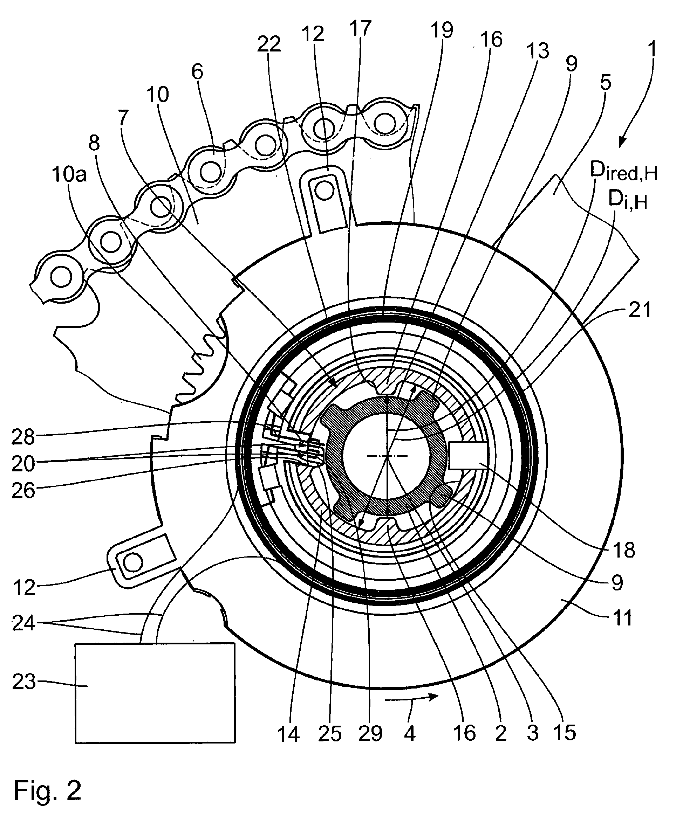

In Fig. 2 ist die Kraftübertragungseinheit 1 in einer Freilaufstellung der Tretlagerwelle 2 dargestellt. In der Freilaufstellung sind die Schaltkontakte 20 des Schalters 8 nicht durch die Nocken 9 der Tretlagerwelle 2 betätigt. Der Schalter 8 ist geöffnet. Die Freilaufstellung wird beispielsweise dann eingenommen, wenn ein Fahrer die Tretkurbel 5 und damit die Tretlagerwelle 2 entgegen der Antriebsdrehrichtung 4 betätigt. Die Freilaufstellung kann auch dann eingenommen werden, wenn ein Fahrer nach vorherigem Betätigen der Tretlagerwelle 2 in der Antriebsdrehrichtung 4 die Betätigung beendet und die Hohlwelle 14 aufgrund der Massenträgheit in der Antriebsdrehrichtung 4 geringfügig weiterdreht. Sobald der Nocken 9 nicht mehr an dem oberen Schaltkontakt 20 anliegt, federt das Federbein 28 des oberen Schaltkontakts 20 zurück in seine, von dem unteren Schaltkontakt 20 beanstandete Ausgangsposition, die in Fig. 2 gezeigt ist. In der Freilaufstellung wird von dem Schalter 8 ein von dem Antriebssignal abweichendes Freilaufsignal bereitgestellt und an die Steuerung 23 des Elektromotors über das induktive Übertragungssystem übertragen. Infolge des Freilaufsignals wird der Elektromotor angehalten oder von der Tretlagerwelle 2 entkoppelt. Das Anhalten bzw. Entkoppeln des Elektromotors von der Tretlagerwelle 2 erfolgt schnell, sodass insbesondere in einem Drehwinkelbereich von maximal 90° um die Drehachse 3 gemäß dem gezeigten Ausführungsbeispiel der Elektromotor zum Stehen kommt bzw. der unterstützende Antrieb auf die Tretlagerwelle 2 entkoppelt wird. Der Drehwinkelbereich zum Abbremsen oder Entkoppeln des Elektromotors kann infolge der schnellen Signalübertragung durch das induktive Übertragungssystem auf höchstens 45° und insbesondere auf höchstens 30° reduziert werden.

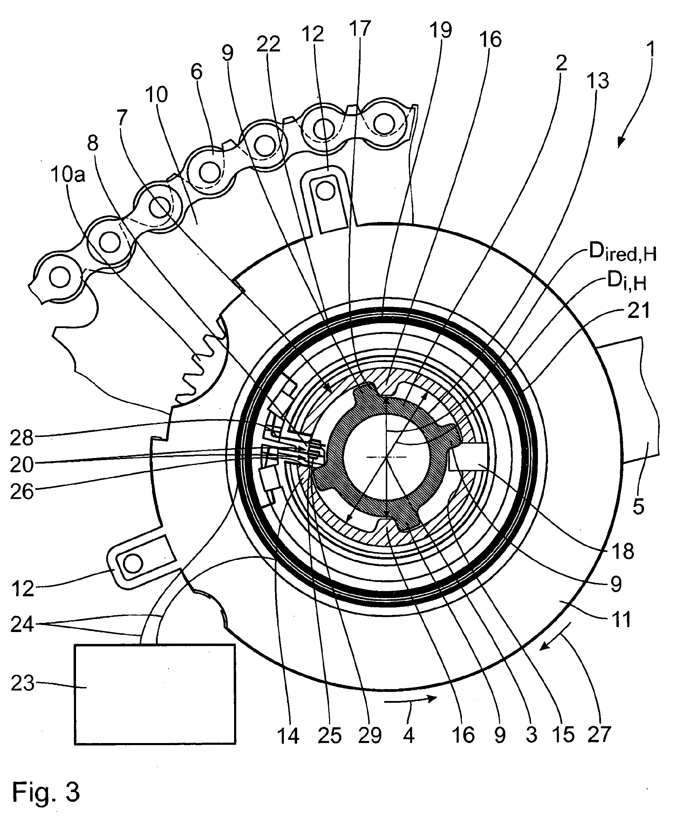

Gemäß der Darstellung der Kraftübertragungseinheit 1 in Fig. 3 wird die Tretkurbel 5 und damit die Tretlagerwelle 2 von dem Fahrer entgegen der Antriebsdrehrichtung 4 in einer Betätigungsrichtung 27 zum Betätigen der am Hinterrad des Fahrrads vorgesehenen Rücktrittbremse betätigt. In der gezeigten Anordnung der Kraftübertragungseinheit 1 befindet sich die Tretlagerwelle 2 in einer Bremsstellung, d. h. die Tretlagerwelle 2 ist gegenüber der Hohlwelle 14 um die Drehachse 3 entgegen der Antriebsdrehrichtung 4 maximal verdreht, wobei der maximale Verdrehwinkel der Tretlagerwelle 2 gegenüber der Hohlwelle 14 durch die Anordnung der Nocken 9 und der Anschlagelemente 16 zueinander festgelegt ist. In der Bremsstellung liegen die Nocken 9 der Tretlagerwelle 2 an - bezogen auf die Antriebsstellung - entgegen der Antriebsdrehrichtung 4 benachbarten Anschlagelementen 16 an. Die Betätigungsrichtung 27 der Tretlagerwelle 2 ist in der Bremsstellung entgegen der Antriebsdrehrichtung 4 gerichtet. In der Bremsstellung ist der Schalter 8 geöffnet. Insofern stellt die Bremsstellung eine gesonderte Stellung der Freilaufstellung der Tretlagerwelle 2 dar. Dadurch, dass die Nocken 9 der Tretlagerwelle 2 an den Anschlagelementen 16 der Hohlwelle 14 anliegen, ist eine Drehmomentübertragung von der Tretlagerwelle 2 auf den Zahnkranz 10 und somit auf das Kraftübertragungsmittel und letztlich auf die Rücktrittbremse am Hinterrad entgegen der Antriebsdrehrichtung 4 möglich.

Ein mit der Kraftübertragungseinheit 1 ausgestattetes Fahrrad umfasst weiterhin ein Vorderrad, ein Hinterrad mit einer an der Radnabe angeordneten Rücktrittbremse, mindestens eine Tretkurbel 5 mit einem Pedal zum Betätigen der Kraftübertragungseinheit 1 durch Muskelkraft in oder entgegen der Antriebsdrehrichtung 4, den Elektromotor zum unterstützenden Antreiben des Fahrrads in der Antriebsdrehrichtung 4, eine mit der Kraftübertragungseinheit 1 in Signalverbindung stehende Steuerung 23 zur Anpassung des Antriebsverhaltens des Elektromotors und das Kraftübertragungsmittel, insbesondere die Kette 6, zur Übertragung der Antriebs- oder Abbremskraft von der Kraftübertragungseinheit 1 auf das Hinterrad.

Ein derartiges Fahrrad erlaubt sowohl das Antreiben des Fahrrads durch Muskelkraft über die Pedale mit einem zusätzlichen Antreiben durch den Elektromotor, einen Freilauf bei Nichtbetätigung der Pedale derart, dass die Pedale nicht mitdrehen, sowie ein Abbremsen des Fahrrads durch Betätigen der Rücktrittbremse am Hinterrad durch Betätigen der Tretlagerwelle 2 entgegen der Antriebsdrehrichtung 4.

## Patentansprüche

1. Kraftübertragungseinheit für ein durch einen auf ein Kraftübertragungsmittel wirkenden Elektromotor unterstützend antreibbares Fahrrad umfassend
a. eine durch Muskelkraft um eine Drehachse (3) antreibbare Tretlagerwelle (2) zum Übertragen einer Antriebskraft in einer Antriebsdrehrichtung (4) oder einer Bremskraft entgegen der Antriebsdrehrichtung auf das Kraftübertragungsmittel (6), insbesondere eine mit einem Kettenblatt (10) drehfest verbundene Kette, und
b. eine mit der Tretlagerwelle (2) zusammenwirkende Freilaufeinheit (7) mit einem Schalter (8) zum Entkoppeln des unterstützenden Elektromotors von dem Kraftübertragungsmittel (6), wenn kein Antrieb durch Muskelkraft in der Antriebsdrehrichtung (4) auf das Kraftübertragungsmittel (6) übertragen wird,
wobei der Schalter (8) derart gestaltet ist,
c. dass in einer Antriebsstellung der Tretlagerwelle (2) ein Antriebssignal zur Übertragung an eine Steuerung (23) des Elektromotors (6) bereitgestellt wird, sodass der Elektromotor das Kraftübertragungsmittel (6) unterstützend zum Antrieb durch Muskelkraft antreibt, und
d. dass in jeder von der Antriebsstellung abweichenden Stellung der Tretlagerwelle (2) ein von dem Antriebssignal abweichendes Freilaufsignal zur Übertragung an die Steuerung (23) des Elektromotors bereitgestellt wird, sodass der Elektromotor angehalten oder von der Tretlagerwelle (2) und von dem Kraftübertragungsmittel (6) entkoppelt ist,
**dadurch gekennzeichnet, dass**
die Tretlagerwelle (2) mindestens zwei bezüglich der Drehachse (3) radial nach außen gerichtete Nocken (9) aufweist, von denen mindestens einer zum Betätigen des Schalters (8) angelegt ist.

2. Kraftübertragungseinlaeit nach Anspruch 1, **dadurch gekennzeichnet, dass** der Schalter (8) zwei Schaltkontakte (20) aufweist, die von der Tretlagerwelle (2) derart betätigt werden, dass sie in der Antriebsstellung geschlossen und in der von der Antriebsstellung abweichenden Stellung geöffnet sind.

3. Kraftübertragungseinheit nach einem der vorstehenden Ansprüche, **gekennzeichnet durch** ein berührungsloses, insbesondere induktives, Übertragungssystem zur Übertragung der vom Schalter (8) bereitgestellten Signale an die Steuerung (23) des Elektromotors.

4. Kraftübertragungseinheit nach Anspruch 3, **dadurch gekennzeichnet, dass** der Schalter (8) mit einer mitdrehenden Spule (19) verbunden ist, die durch einen Luftspalt (21) beabstandet zu einer feststehenden Spule (22) angeordnet ist, die an die Steuerung (23) des Elektromotors anschließbar ist, insbesondere mittels einer elektrischen Leitung (24).

5. Kraftübertragungseinheit nach einem der vorstehenden Ansprüche, **dadurch gekennzeichnet, dass** die Signalübertragung derart erfolgt, dass ein Abbremsen des Elektromotors innerhalb eines Drehwinkels von höchstens 90°, insbesondere von höchstens 45° und insbesondere von höchstens 30° erfolgt.

6. Kraftübertragungseinheit nach einem der vorstehenden Ansprüche, **dadurch gekennzeichnet, dass**
der Schalter (8) in einer Freilaufstellung der Tretlagerwelle (2) geöffnet ist, wobei die Freilaufstellung dann vorliegt, wenn die Tretlagerwelle (2) entgegen der Antriebsdrehrichtung (4) betätigt ist oder wenn nach Beenden der Betätigung der Tretlagerwelle (2) in der Antriebsdrehrichtung (4) eine Hohlwelle (14) aufgrund der Massenträgheit in der Antriebsdrehrichtung (4) geringfügig weiter dreht.

7. Kraftübertragungseinheit nach einem der vorstehenden Ansprüche, **dadurch gekennzeichnet, dass** die Tretlagerwelle (2) in einer Hohlwelle (14) angeordnet ist, die an einer Innenwand (15) mehrere Anschlagelemente (16) für die Nocken (9) zur Drehmomentübertragung zwischen der Tretlagerwelle (2) und der Hohlwelle (14) aufweist.

8. Kraftübertragungseinheit nach Anspruch 7, **gekennzeichnet durch** ein Dämpfungselement (18) als Anschlagelement zur Dämpfung des Anschlagens der Nocken (9).

9. Kraftübertragungseinheit nach einem der Ansprüche 7 oder 8, **gekennzeichnet durch** eine Anschlagwand (25), die entgegen der Antriebsdrehrichtung (4) vor dem Schalter (8) angeordnet ist, um eine Betätigung des Schalters (8) bei Drehung der Tretlagerwelle (2) entgegen der Antriebsdrehrichtung (4) zu unterbinden.

10. Kraftübertragungseinheit nach einem der vorstehenden Ansprüche , **dadurch gekennzeichnet, dass** die Tretlagerwelle (2) vier Nocken (9) aufweist, die in der Antriebsstellung derart angeordnet sind,
dass ein erster Nocken zur Betätigung des Schalter (8), zwei insbesondere einander diametral gegenüberliegend angeordnete Nocken zur Kraftübertragung in der Antriebsdrehrichtung (4) auf das Kraftübertragungsmittel (6) und ein insbesondere dem ersten Nocken diametral gegenüberliegend angeordneter vierter Nocken zur Dämpfung dienen

11. Kraftübertragungseinheit nach einem der vorstehenden Ansprüche, **gekennzeichnet durch** eine von der Antriebsstellung abweichende Bremsstellung der Tretlagerwelle (2) zum Übertragen einer Bremskraft entgegen der Antriebsdrehrichtung (4) über das Kraftübertragungsmittel (6) auf eine an einem Hinterrad des Fahrrads vorgesehene Rücktrittbremse **durch** Drehung der Tretlagerwelle (2) entgegen der Antriebsdrehrichtung (4).

12. Fahrrad mit
a. einem Vorderrad,
b. einem Hinterrad mit einer an einer Radnabe angeordneten Rücktrittbremse,
c. einer Kraftübertragungseinheit (1) nach einem der vorstehenden Ansprüche zum Antreiben oder Abbremsen des Fahrrads,
d. mindestens einer Tretkurbel (5) mit einem Pedal zum Betätigen der Kraftübertragungseinheit (1) durch Muskelkraft in oder entgegen der Antriebsdrehrichtung (4),
e. einem Elektromotor zum unterstützenden Antreiben des Fahrrads in der Antriebsdrehrichtung (4),
f. einer mit der Kraftübertragungseinheit (1) in Signalverbindung stehenden Steuerung (23) zur Anpassung des Antriebsverhaltens des Elektromotors und
g. einem Kraftübertragungsmittel (6), insbesondere einer mit einem Kettenblatt (10) drehfest verbundenen Kette, zur Übertragung einer Antriebs- oder Abbremskraft von der Kraftübertragungseinheit (1) auf das Hinterrad.

## Claims

1. Force transmission unit for a bicycle which is drivable with the assistance of an electric motor acting on a force transmission means, the force transmission unit comprising
a. a bottom bracket axle (2) drivable about an axis of rotation (3) by muscle power for transmitting on the force transmission means (6), in particular a chain which is co-rotatably connected to a chain ring (10), a driving force in a direction of rotational drive (4) or a braking force counter to the direction of rotational drive, and
b. a freewheel unit (7) interacting with the bottom bracket axle (2), the freewheel unit (7) comprising a switch (8) for decoupling the assisting electric motor from the force transmission means (6) when no driving force is transmitted to the force transmission means (6) by muscle power in the direction of rotational drive (4),
the switch (8) being configured in such a way
c. that in a driving position of the bottom bracket axle (2), a driving signal is provided for transmission to a control unit (23) of the electric motor (6), allowing the electric motor to drive the force transmission means in assistance to the driving force provided by muscle power, and
d. that in each position of the bottom bracket axle (2) different from the driving position, a freewheeling signal different from the driving signal is provided for transmission to the control unit (23) of the electric motor, causing the electric motor to stop or to be decoupled from the bottom bracket axle (2) and from the force transmission means (6),
**characterized in that**
the bottom bracket axle (2) has at least two cams (9) extending radially outwards in relation to the axis of rotation (3), at least one of which cams (9) is in contact for actuating the switch (8).

2. Force transmission unit according to claim 1, **characterized in that** the switch (8) has two switching contacts (20) which are actuated by the bottom bracket axle (2) in such a way that they are closed in the driving position and open in the position different from the driving position.

3. Force transmission unit according to one of the preceding claims, **characterized by** a contactless, in particular inductive, transmission system for transmission of the signals provided by the switch (8) to the control unit (23) of the electric motor.

4. Force transmission unit according to claim 3, **characterized in that** the switch (8) is connected to a co-rotating coil (19) which is arranged at a distance, defined by an air gap (21), to a stationary coil (22) which is connectable to the control unit (23) of the electric motor, in particular by means of an electric line (24).

5. Force transmission unit according to one of the preceding claims, **characterized in that** the signal transmission takes place in such a way that a braking of the electric motor occurs within an angle of rotation of no more than 90°, in particular of no more than 45°, and in particular of no more than 30°.

6. Force transmission unit according to one of the preceding claims, **characterized in that** the switch (8) is open when the bottom bracket axle (2) is in a freewheeling position, wherein the freewheeling position is reached when the bottom bracket axle (2) is actuated counter to the direction of rotational drive (4) or when the bottom bracket axle (2) is no longer actuated in the direction of rotational drive (4), a hollow axle (14) continues to rotate slightly in the direction of rotational drive (4) due to its mass inertia.

7. Force transmission unit according to one of the preceding claims, **characterized in that** the bottom bracket axle (2) is arranged in a hollow axle (14) which has several stop elements (16) for the cams (9) arranged on an inner wall (15) for torque transmission between the bottom bracket axle (2) and the hollow axle (14).

8. Force transmission unit according to claim 7, **characterized by** a damping element (18) serving as a stop element for damping the abutment of the cams (9).

9. Force transmission unit according to one of claims 7 or 8, **characterized by** a stop wall (25) which is arranged in front of the switch (8) counter to the direction of rotational drive (4) to prevent actuation of the switch (8) when the bottom bracket axle (2) is rotating counter to the direction of rotational drive (4).

10. Force transmission unit according to one of the preceding claims, **characterized in that** the bottom bracket axle (2) has four cams (9) which are, in the driving position, arranged in such a way that a first cam serves for actuating the switches (8), two cams, which are in particular arranged diametrically opposite to each other, serve for force transmission to the force transmission means (6) in the direction of rotational drive (4), and a fourth cam, which is in particular arranged diametrically opposite to the first cam, serves for damping.

11. Force transmission unit according to one of the preceding claims, **characterized by** a braking position of the bottom bracket axle (2) different from the driving position for transmitting a braking force via the force transmission means (6) to a back-pedal brake provided on a rear wheel of the bicycle in a direction counter to the direction of rotational drive (4) by rotating the bottom bracket axle (2) counter to the direction of rotational drive (4).

12. Bicycle comprising
a. a front wheel,
b. a rear wheel including a back-pedal brake arranged on a wheel hub,
c. a force transmission unit (1) according to one of the preceding claims for driving or braking the bicycle,
d. at least one pedal crank (5) including a pedal for actuating the force transmission unit (1) by muscle power in or counter to the direction of rotational drive (4),
e. an electric motor for assisted driving of the bicycle in the direction of rotational drive (4),
f. a control unit (23) which is in signal connection with the force transmission unit (1) for adjusting the drive behaviour of the electric motor; and
g. a force transmission means (6), in particular a chain which is co-rotatably connected to a chain ring (10), for transmitting a drive or braking force from the force transmission unit (1) to the rear wheel.

## Revendications

1. Unité de transmission de force destinée à une bicyclette pouvant être entraînée sous assistance par un moteur électrique fonctionnant avec un moyen de transmission de force, comprenant
a. un arbre de palier de pédalier (2) pouvant être entraîné autour d'un axe de rotation (3) à l'aide de la force musculaire afin de transmettre une force d'entraînement à un moyen de transmission de force (6) dans une direction d'entraînement en rotation (4) ou une force de freinage dans le sens contraire à la direction d'entraînement en rotation, en particulier, à l'aide d'une chaîne reliée solidement avec un plateau (10), et
b. une unité de roue libre (7), agissant conjointement avec l'arbre de palier de pédalier (2), comprenant un commutateur (8) pour le découplage du moteur électrique en assistance du moyen de transmission de force (6) lorsqu'aucun entraînement par la force musculaire n'est transmis sur le moyen de transmission de force (6) sur le moyen de transmission de force (6) dans la direction d'entraînement en rotation (4),
le commutateur (8) étant conçu de telle manière
c. qu'un signal d'entraînement pour la transmission à une commande (23) du moteur électrique (6) est mis en oeuvre dans une position d'entraînement de l'arbre de palier de pédalier (2) de sorte que le moteur électrique du moyen de transmission de force (6) vient en assistance à l'entraînement par la force musculaire, et
d. que dans chaque position de l'arbre de palier de pédalier (2) déviant de la position d'entraînement, un signal de roue libre, différent du signal d'entraînement, est mis en oeuvre pour la transmission à la commande (23) du moteur électrique, de sorte que le moteur électrique est arrêté ou est découplé de l'arbre de palier de pédalier (2) et du moyen de transmission de la force (6),
**caractérisée en ce que**
l'arbre de palier de pédalier (2) présente au moins deux cames (9), orientées radialement vers l'extérieur par rapport à l'axe de rotation (3), dont au moins une est installée pour l'actionnement du commutateur (8).

2. Unité de transmission de force selon la revendication 1 **caractérisée en ce que** le commutateur (8) présente deux contacts de commutation (20) qui sont actionnés par l'arbre de palier de pédalier (2) de telle sorte qu'ils sont fermés dans la position d'entraînement et ouverts dans une position différant de la position d'entraînement.

3. Unité de transmission de force selon l'une des revendications précédentes **caractérisée par** un système de transmission sans contact, en particulier inductif, pour la transmission des signaux mis en oeuvre par le commutateur (8) vers la commande (23) du moteur électrique.

4. Unité de transmission de force selon la revendication 3 **caractérisée en ce que** le commutateur (8) est relié avec une bobine (19), tournant avec lui, qui est disposée, séparée par un entrefer (21), par rapport à une bobine (22) fixe qui peut être associée à la commande (23) du moteur électrique, en particulier, au moyen d'un câble électrique (24).

5. Unité de transmission de force selon l'une des revendications précédentes **caractérisée en ce que** la transmission du signal s'effectue de telle manière que le freinage du moteur électrique est effectué dans un angle de rotation d'au maximum 90 °, en particulier, d'au maximum 45 ° et en particulier d'au maximum 30 °.

6. Unité de transmission de force selon l'une des revendications précédentes, **caractérisée en ce que**
le commutateur (8) est ouvert pour une position de roue libre de l'arbre de palier de pédalier (2), la position de roue libre étant en place lorsque l'arbre de palier de pédalier (2) est actionné dans le sens contraire à la direction d'entraînement en rotation (4), ou lorsqu'après l'achèvement de l'actionnement de l'arbre de palier de pédalier (2) dans la direction d'entraînement en rotation (4), un arbre creux (14) poursuit légèrement l'entraînement en raison de l'inertie massique dans la direction d'entraînement en rotation (4).

7. Unité de transmission de force selon l'une des revendications précédentes **caractérisée en ce que** l'arbre de palier de pédalier (2) est disposé dans un arbre creux (14) qui présente sur une face intérieure (15) plusieurs éléments de butée (16) pour les cames (9) destinés à la transmission du moment de rotation entre l'arbre de palier de pédalier (2) et l'arbre creux (14).

8. Unité de transmission de force selon la revendication 7 **caractérisée par** un élément d'amortissement (18) servant d'élément de butée pour l'amortissement de l'oscillation des cames (9).

9. Unité de transmission de force selon l'une des revendications 7 ou 8 **caractérisée par** une paroi d'appui (25) qui est disposée devant le commutateur (8), dans le sens contraire à la direction d'entraînement en rotation (4), afin de couper court à un actionnement du commutateur (8) par une rotation de l'arbre de palier de pédalier (2) dans le sens contraire à la direction d'entraînement en rotation (4).

10. Unité de transmission de force selon l'une des revendications précédentes **caractérisée en ce que** l'arbre de palier de pédalier (2) présente quatre cames (9) qui sont disposées dans la position d'entraînement de telle sorte
qu'une première came sert à l'actionnement du commutateur (8), deux cames, disposées en particulier de manière diamétralement opposée, servent à la transmission de la force au moyen de transmission de la force (6) dans la direction d'entraînement en rotation (4) et une quatrième came, disposée en particulier de manière diamétralement opposée à la première came, sert à l'amortissement.

11. Unité de transmission de force selon l'une des revendications précédentes **caractérisée par** une position de freinage de l'arbre de palier de pédalier (2) différente de la position d'entrainement pour la transmission d'une force de freinage, dans le sens contraire à la direction d'entraînement en rotation (4), à un frein à rétropédalage prévu sur la roue arrière de la bicyclette, par l'intermédiaire d'un moyen de transmission de force (6), par une rotation de l'arbre de palier de pédalier (2) dans le sens contraire à la direction d'entraînement en rotation (4).

12. Bicyclette comprenant
a. une roue avant,
b. une roue arrière comprenant un frein à rétropédalage disposé dans un moyeu de roue,
c. une unité de transmission de force (1) selon l'une des revendications précédentes pour l'entraînement ou le freinage de la bicyclette,
d. au moins une manivelle de pédalier (5) comprenant une pédale pour l'actionnement de l'unité de transmission de force (1) par la force musculaire dans le sens ou dans le sens contraire à la direction d'entraînement en rotation (4),
e. un moteur électrique pour l'entraînement sous assistance de la bicyclette dans le sens de la direction d'entraînement en rotation (4),
f. une commande (23) étant en liaison par signal avec l'unité de transmission de force (1) pour l'ajustement du comportement en entraînement du moteur électrique, et
g. un moyen de transmission de la force (6), notamment une chaîne reliée fixement avec un plateau (10), pour la transmission d'une force d'entraînement ou de freinage de l'unité de transmission de force (1) vers la roue arrière.
